Europäisches Patentamt

European Patent Office

Office européen des brevets

(19)

(11) EP 0 794 411 A2

(12) EUROPEAN PATENT APPLICATION

(43) Date of publication:
10.09.1997  Bulletin 1997/37

(51) Int Cl.⁶: **G01F 1/66**

(21) Application number: **97300615.8**

(22) Date of filing: **30.01.1997**

(84) Designated Contracting States:
**DE FR GB**

(30) Priority: **05.03.1996 GB 9604665**

(71) Applicant: **Montec International Limited**
**Manchester M5 2DL (GB)**

(72) Inventor: **Kirby, Keith**
**Burnley BB12 8AD (GB)**

(74) Representative: **Every, David Aidan et al**
**MARKS & CLERK,**
**Sussex House,**
**83-85 Mosley Street**
**Manchester M2 3LG (GB)**

(54) **Flow measurement**

(57)    A method for measuring a flow velocity of a liquid uses a signal transmitter and receiver. First a region of the liquid where flow velocity is to be determined is selected at a chosen distance from the transmitter. A time period for a for a signal to travel from the transmitter to the receiver via the region is calculated and a plurality of pulsed stochastic noise signals are sequentially transmitted to said region at a given pulse repetition frequency. The reflected signals are received when said time period for each transmitted pulse has elapsed and they are correlated with a copy of the corresponding transmitted signals to identify the reflected signals. A Doppler shift signal whose frequency is representative of the frequency differences between the transmitted and received signals is generated. The Doppler shift signal is sampled at two rates below the Nyquist limit to provide perceived frequency values which are then de-aliased to give a true frequency reading before the flow velocity is then calculated.

FIG.1

## Description

The present invention relates to flow measurement and more particularly, but not exclusively, to the measurement of the velocity of a liquid flowing in an open channel.

It is known to measure the flow velocity of a liquid by using devices which rely on the Doppler principle. In such devices a transmitter emits a continuous ultrasonic signal of known frequency into the flow and a receiver collects reflected signals for analysis. The transmitted signal is reflected by floating particles in the liquid and the frequency of the reflected signal is compared with that of the transmitted signal to establish a frequency difference (the Doppler shift). The reflected signal will have a frequency greater or less than that of the transmitted signal depending on whether the liquid and therefore the reflecting particle is moving towards or away from the receiver.

One problem with such acoustic measuring devices is that they are responsive to multiple signal reflections, each reflection being from a floating object or particle in the liquid. Complex systems have been designed to select particular reflected Doppler shifted signals to establish the flow velocity. In some cases the flow velocity has been calculated from the reflected signal of the largest amplitude or from the average frequency of several signals. Such systems have all been prone to inaccuracies.

In polluted liquid where the concentration of suspended solids or floating particles is high, the transmitted signal is not able to progress very far without being reflected by particles close to the transmitter. In such instances the received signals are only representative of a restricted volume of flow around the transmitter and this can often produce a reading which is not representative of the mean velocity of the whole flow. In addition, the presence of the transmitter or receiver will affect the flow characteristics in the immediate area and the derived signals will again not be representative of the mean velocity of the whole flow.

In general, known ultrasonic Doppler shift flow measurement devices provide readings to an accuracy of around 10%. When the liquid is polluted inaccuracies can rise to between -20% and -50%.

In order to overcome the above problems associated with continuous signal transmission flow measurement, systems using a "range-gated" principle have been contemplated. In a range-gated system a pulsed signal is transmitted and after a predetermined time the receiver is activated to receive a reflected version of the signal. By waiting a predetermined time before activating the receiver it is possible to select a reflected signal received from a particular region in the liquid to the exclusion of other reflected signals. The predetermined time is calculated as the time required for the transmitted signal to travel to a selected region in the liquid and for the reflected signal to return to the receiver.

Known range-gated systems suffer from the disadvantage that only one pulse can be sent at a time as the system has to wait for the reflected signal to return before transmitting a subsequent pulse. If more than one pulse is present in the liquid at any one time then it becomes difficult to analyse the received signals and ambiguities occur. The result is that a range-gated system has limited application. In particular, since there is a period where the return of the reflected pulse is awaited the measurement system has relatively long periods where no new useful information is received particularly when measurements of flow velocity are required at relatively long distances away.

It is an object of the present invention to obviate or mitigate the aforesaid disadvantages.

According to a first aspect of the present invention there is provided a method of measuring a flow velocity of a liquid using a signal transmitter and receiver, comprising the steps of:

selecting a region of said liquid, at a chosen distance from said transmitter, where flow velocity is to be determined;
calculating a time period for a signal to travel from said transmitter to said receiver via said region;
transmitting a plurality of pulsed stochastic noise signals sequentially to said region at a given pulse repetition frequency;
receiving reflected signals when said time period for each transmitted pulse has elapsed;
correlating the received signals with a copy of the corresponding transmitted signals to identify the reflected signals;
generating a Doppler shift signal whose frequency is representative of the frequency differences between the transmitted and received signals; and
calculating the flow velocity by reference to the Doppler shift signal frequency.

Thus by transmitting stochastic noise a range-gated system may be used to permit a plurality of pulses to be present in the water simultaneously.

Preferably the Doppler shift signal is sampled at a rate equivalent to the pulse repetition frequency of the plurality of stochastic noise pulses to provide discrete sampled frequency values.

For each pulse transmitted and received a Doppler shift signal may be generated, and when a predetermined number of samples have been obtained the plurality of stochastic noise pulses are preferably transmitted at a second pulse repetition frequency. With a sampling rate than the Nyquist limit of twice the maximum frequency of the signal being sampled the sampled signals may be de-aliased by taking sets of measurements at two or more different pulse repetition frequencies.

Conveniently the sampled frequency values of the Doppler shift signal are converted from a time domain signal to a frequency domain signal to enable calculation of an average Doppler shift frequency. This conversion is preferably effected by a Fourier transform.

The velocity of the flow may be calculated from the average Doppler shift frequency.

The average Doppler shift frequency may calculated by determining the centroid of the first moment of area of a plot of sampled frequency values in the frequency domain.

The average Doppler shift frequencies for each pulse repetition frequency may be de-aliased by calculating a real Doppler shift frequency for which the combination of the average Doppler shift frequencies are unique.

Preferably the signal is in the form of a pulse of ultrasonic frequency.

A copy of the transmitted stochastic noise signal is preferably passed to a delay circuit at the same time as it is transmitted. The copy of the signal is delayed by the delay circuit before being passed to be correlated with the transmitted signal.

According to a second aspect of the present invention there is provided a method of measuring a flow velocity of a liquid using a signal transmitter and receiver, comprising the steps of:

a) transmitting a plurality of pulsed signals sequentially to a region at a first pulse repetition frequency;
b) receiving reflected signals from said region for each transmitted signal;
c) generating Doppler shift signals whose frequency is representative of the frequency differences between the transmitted and reflected signals;
d) sampling the Doppler shift signals at a sample rate that is less than the Nyquist limit of twice the frequency of the signal being sampled;
e) calculating an average perceived Doppler shift frequency from the samples of the Doppler shift signals;
f) transmitting a plurality of pulsed signals sequentially to said region at a different pulse repetition frequency;
g) repeating steps b) to e);
h) de-aliasing the calculated average perceived Doppler shift frequencies to provide a real Doppler shift frequency; and
i) calculating the flow velocity by reference to the real Doppler shift signal frequency.

The average perceived Doppler shift frequencies for each pulse repetition frequency may de-aliased by calculating a real Doppler shift frequency for which the combination of the perceived Doppler shift frequencies are unique.

The pulsed signals are preferably transmitted at two or more different pulse repetition frequencies and the reflected signals in each case sampled at a rate equal to the pulse repetition frequency.

A specific embodiment of the present invention will now be described, by way of example only, with reference to the accompanying drawing in which:

Figure 1 is a schematic block diagram of a measurement system using the method of the present invention;
Figure 2 is a detailed block diagram of the measurement system of figure 1;
Figure 3 is plot of a sampled Doppler shift signal shown in the frequency domain;
Figure 4 is a flow diagram of the operation of part of the measurement system;
Figure 5 is a flow diagram showing a de-aliasing technique used in an aspect of the present invention; and
Figure 6 is a graph used in the de-aliasing technique of figure 5.

Referring now to the drawing, an ultrasonic transmitter 1 e.g. a piezoelectric transducer is positioned in an open channel conduit (not shown) in which water is flowing. The transducer 1 is driven via amplifier 2 by a signal generator which produces timed pulses of stochastic noise. The ultrasonic noise pulses are transmitted into the water by the transmitter 1 and are reflected by any floating particle P in the path of the signal.

The frequency of each reflected pulse, in accordance with the Doppler principle, is representative of the velocity V of the floating particle P from which it is reflected, and accordingly representative of the velocity of the flow local to that particle. Movement of the particle through the flow volume towards the transducer 1 compresses the wavelength of the reflected wave, thereby increasing the frequency of the pulses, whereas movement of the particle away from the transducer 1 lengthens the wavelength of the reflected wave thereby decreasing the frequency of the pulses.

An ultrasonic receiver 3 is positioned adjacent the transmitter and is capable of receiving the reflected pulses. The output of the receiver 3 is connected to a receiver unit and filter which in turn is connected to a wide band correlator and processing circuitry 4.

The output of the signal generator is passed to a delay circuit at the same time as it is passed to the transmitter 1 and after a predetermined time delay the signal is passed to the correlator. The delay introduced by the delay circuit is controlled by a selected delay period input.

The present invention is used to calculate flow velocity by first selecting a region of the water at a particular distance or range from the transmitter 1. The time delay is then calculated as being the time it would take for a pulse to travel through the water, be reflected at the pre-selected region and to travel to the receiver 3. With the distance or range of distances having been selected and the velocity of sound in water being known, this is a simple calculation. This calculated time is then passed to the delay circuit.

After each pulse is transmitted, the signals collected by the receiver are ignored until the predetermined delay after transmitting that pulse has elapsed. The received signals comprise many components but include Doppler shifted versions of the transmitted pulses. The Doppler shifted signal is extracted by a bandpass filter and is passed to the correlator where it is compared with the time delayed copy of that transmitted pulse in a known manner to extract the reflected version of the transmitted pulse from surrounding noise and clutter. The output of the correlator is a Doppler shift signal having a frequency representing the difference in frequency between the transmitted and received pulse. This output is passed to conventional processing circuitry which performs a Fourier transform on the Doppler shift signal and calculates the flow velocity of the water.

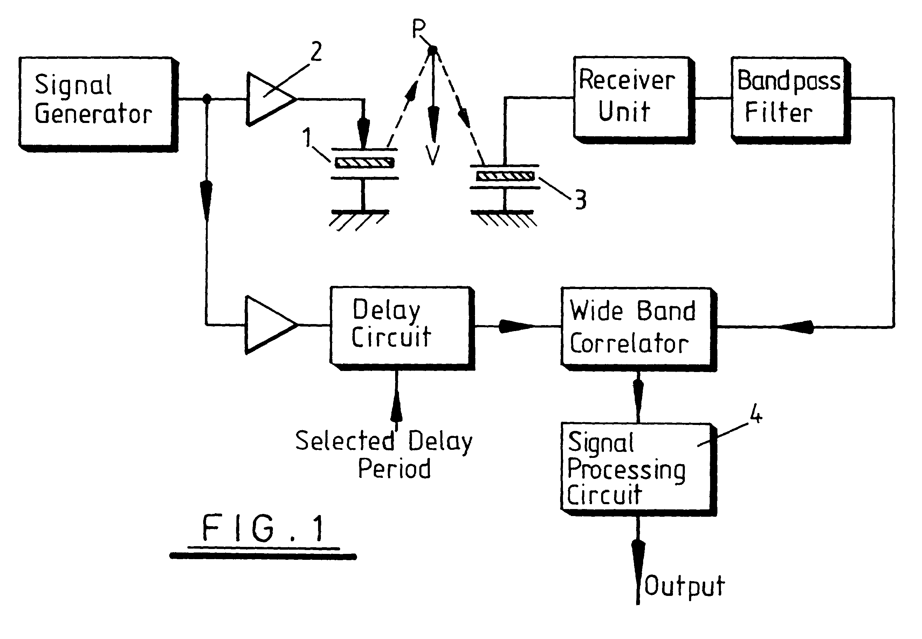

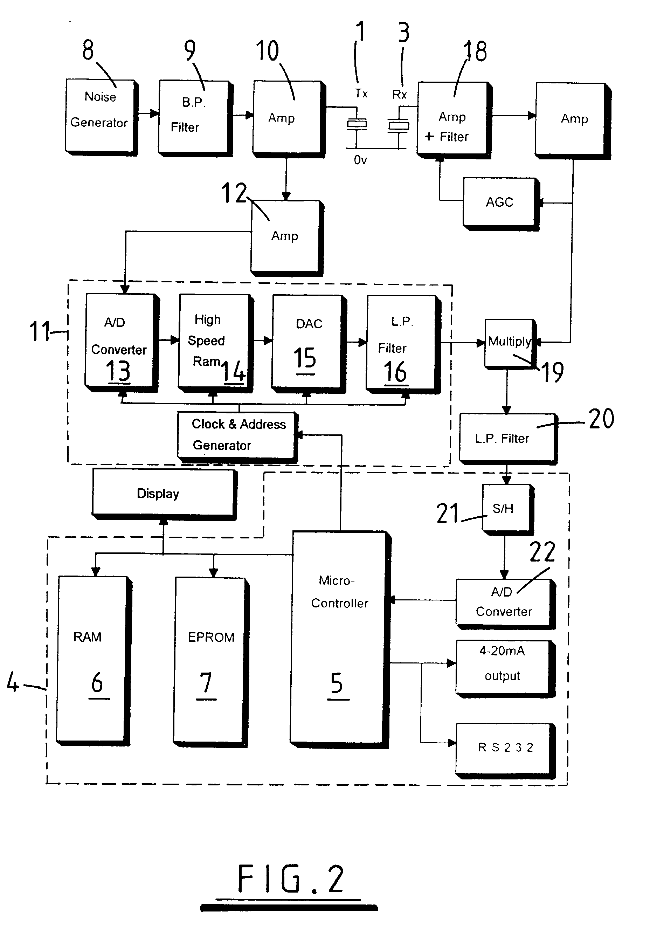

Figure 2 shows in more detail the components of the measuring circuit of figure 1. The signal processing circuit 4 comprises a microprocessor 5 connected to RAM memory 6, an EPROM memory 7 and other circuitry which is described below.

The signal processing circuit 4 governs the transmission of the pulses and the subsequent analysis and processing of the receiver output.

The signal generator comprises a stochastic noise generator 8 connected to a bandpass filter 9 to limit the frequency of the transmitted signals to a desired range. The output of the filter 9 is connected to an amplifier and gate module 10 which, under control of the signal processor 4, converts the noise signal is in pulsed form. The signal processor 4 controls the pulse width and repetition frequency. When each pulse is emitted by the transmitter 1 a copy is passed to a delay unit 11 via amplifier 12.

The delay unit 11 comprises, in sequence, an analogue to digital converter 13 the output of which is connected to a high speed RAM 14, a digital to analogue converter 15 and a low pass filter 16. The unit is controlled by a clock and address generator 17 connected to the microprocessor 5. When a copy of the transmitted signal is passed to the delay circuit it is digitised by ADC 13 and passed to the high speed RAM 14. Here the digitised signal passes through a sequence of memory addresses under the control of the clock and address generator 17, effectively delaying the progress of the digitised signal through the delay unit 11 by the calculated delay period set by the microprocessor 5. The signal finally emerges from the high speed RAM and is converted back to its analogue form by DAC 15 before being passed to the wide band correlator via a low pass filter 16

The reflected signal detected by the receiver is amplified and filtered by an amplifier and a bandpass filter 18 to extract the frequency shifted pulse information and is then passed to the correlator. Here the received signal is mixed by means of a multiplier 19 to extract the reflected version of the transmitted pulse from the surrounding noise and clutter and filtered by a low pass filter 20. The output of the correlator is a Doppler shift pulse whose frequency is the difference between the frequencies of the transmitted and received pulses. This signal is passed to the signal processor 4 for analysis.

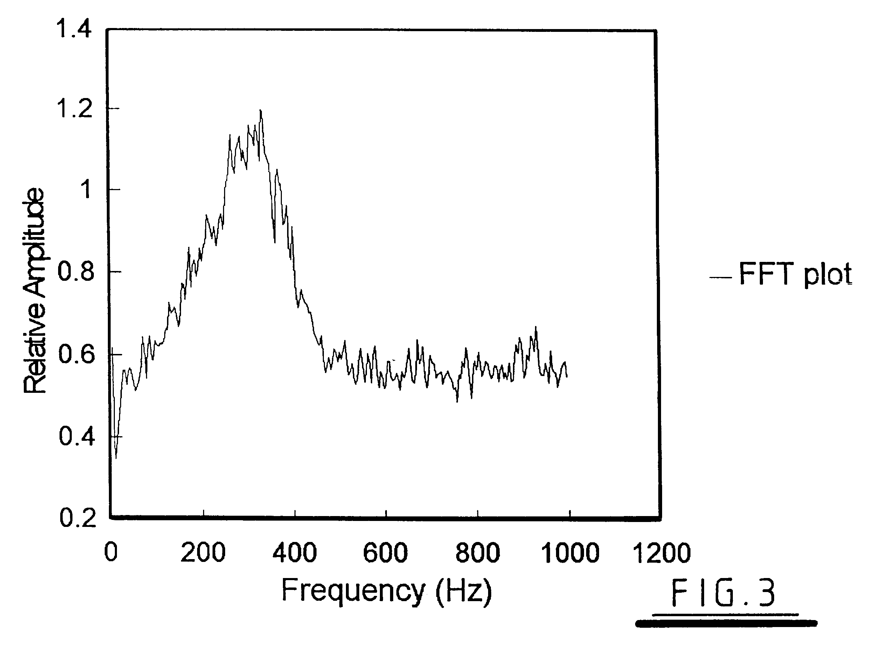

The output of the correlator is in the time domain and to permit easier analysis this signal is sampled and digitised by a sample and hold device 21 and ADC 22. The sampled signal is then converted to the frequency domain by a standard Fast Fourier Transform program in the microprocessor 5. The Doppler shift signal is thus converted into an array of digitised sample points each represented by frequency and amplitude co-ordinates. An example is shown in figure 3.

A software algorithm is then applied to the array elements in order to calculate the frequency represented by the Fast Fourier Transform array. This frequency value is easily converted to a value representing the velocity of the liquid at the selected range. The formula relating the Doppler shift frequency and velocity is:

$$f_d = (2 \, v \, f_t \cos \theta) / C$$

where

$f_d$ = Doppler shift frequency
$f_t$ = centre of transmitter frequency sepctrums
$v$ = flow velocity
$C$ = velocity of sound in the liquid
$\theta$ = incident angle of reflected signal

One example of an algorithm that could be used to calculate the measured frequency is as follows:

a) find the modal value of the array elements;
b) calculate the mean magnitude value of the array;
c) find the upper and lower limits where the amplitude of the response falls below the mean magnitude value on either side of the modal value; and
d) calculate the position of the centroid of the first moment of area between the upper and lower limits.

It is well established that the centroid of the first moment of area of the Doppler shift plot provides a better indication of the flow velocity than the mean or modal values.

For each reflected pulse received one or more samples may be obtained (depending on the sample rate compared to the frequency of the Doppler shift signal). After sufficient samples have been obtained to provide an accurate Doppler shift frequency value, pulses are transmitted at a second repetition frequency and the processing steps are repeated. Thus the stochastic signals are transmitted consecutively at two different pulse repetition frequencies and the correlated signal in each case is sampled at the pulse repetition frequency. This technique is used in order to overcome the problems of aliasing. According to recognised sampling theory, the rate at which a signal must be sampled in order to reproduce accurately the signal is equal to twice the frequency of that signal. If an attempt is made to sample at frequencies above this limit (known as the Nyquist limit) aliasing occurs.

However, in this particular application where there will only be one peak frequency response, it is possible to sample signals of frequencies lower than the Nyquist limit without velocity ambiguities occurring. By sampling the correlated signals consecutively at different frequencies the effects of aliasing can be disregarded. The signals are first sampled at a frequency equal to the first pulse repetition frequency to ascertain a first perceived value of Doppler shift frequency. It is then sampled at a rate equal to the second pulse repetition frequency to obtain a second perceived value of Doppler shift frequency. Although each perceived frequency may be ambiguous, the combinations of the two are unique up to a limit higher than the recognised Nyquist limit. A simple algorithm can be used to de-alias the signals and establish a true measured value of Doppler shift frequency which can then be converted to a flow velocity value using the formula above.

Example

If Doppler shifted signals of 400Hz, 1600Hz and 2400Hz are obtained by using a pulse repetition frequency of 2000Hz and are sampled at a rate of 2000Hz, the resultant perceived frequency in each case would be 400Hz. The signals of 1600Hz and 2400Hz are over the Nyquist limit of half the sampling rate (i.e. in this case 1000Hz) and thus aliasing occurs to give erroneous perceived readings.

If equivalent signals are obtained by using a pulse repetition frequency of 2500Hz and the Doppler shifted signals are then sampled again at a rate of 2500Hz the perceived frequencies respectively would be 400Hz, 900Hz and 100Hz. Again the latter two perceived signals are erroneous as the transmitted frequencies are above the Nyquist limit of 1250Hz.

However, the perceived responses from these two particular sample rates are unique up to a value of 2250Hz and an algorithm can be used to calculate the correct frequency from the combination of perceived frequencies.

By using three pulse repetition frequencies/ sample rates with a high Lowest Common Multiple, for example. 2kHz, 2.3kHz and 2.9kHz the perceived responses can be shown to be unique up to a relatively high frequency (in this case 24kHz).

This technique is used to allow sample rates of lower than the theoretical minimum of half the maximum frequency of Doppler shift. This enables a lower pulse repetition frequency to be used, thus reducing the likelihood of ambiguities caused by clutter as there are fewer pulses present in the water at any stage. In normal circumstances as the velocity of the flow increases so the pulse repetition frequency must be increased. However, this is not necessary if a de-aliasing technique (such as the one described below) is applied.

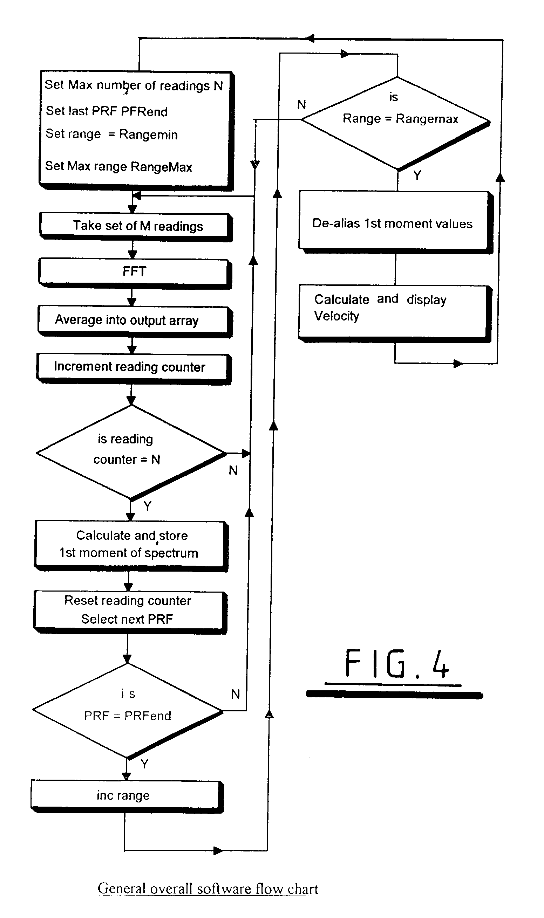

A flow diagram of the software driven processing procedure is shown in figure 4. For a given flow volume the velocity of the flow may be measured at several distances from the transducer between the limits "Rangemin" and "Rangemax". For each range a maximum number of readings N is taken at each pulse repetition frequency. M readings are taken at a time and transferred to the Fast Fourier Transform array of the Doppler shift signal. When the number of readings in the array reaches N the algorithm for calculating the centroid of the first moment of area of the plot is executed and a perceived frequency value is obtained. This procedure is repeated for each pulse repetition frequency. The perceived frequency values are then de-aliased using the technique described below and the final velocity value is calculated and displayed.

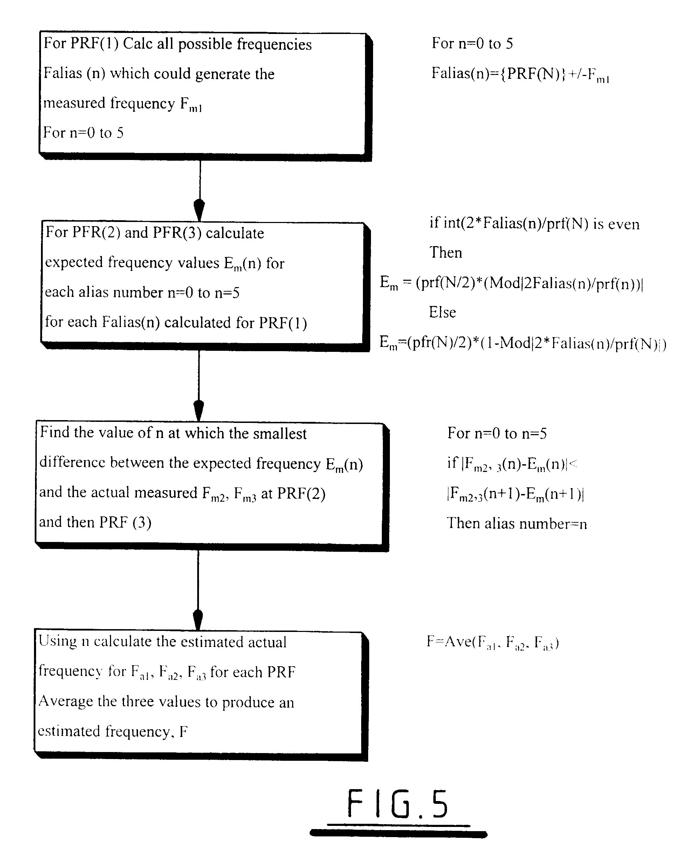

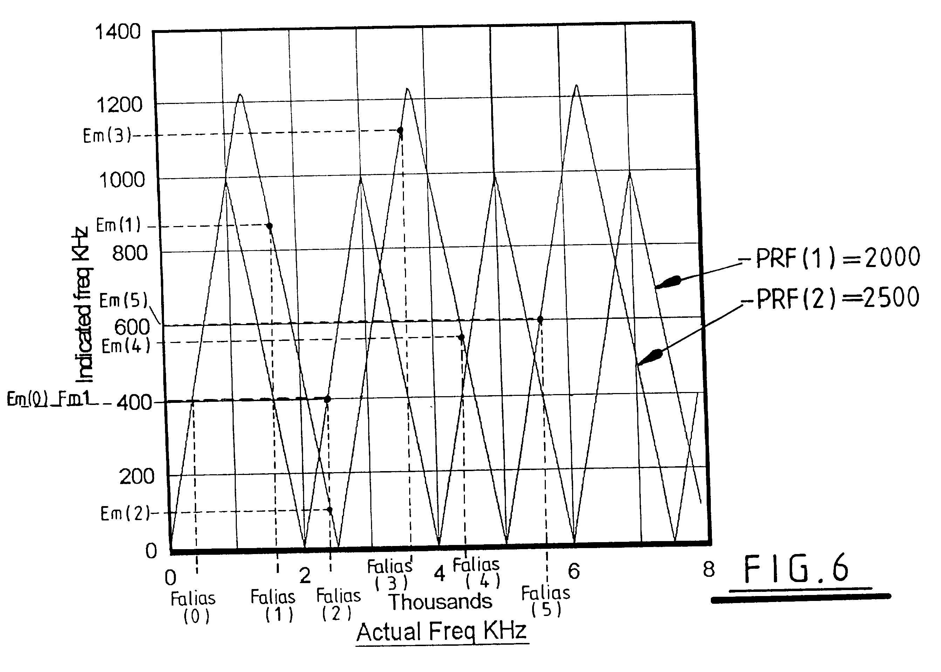

Figure 5 is a flowchart showing an example of a de-aliasing procedure. Frequency measurements using the above described techniques are made at three pulse repetition frequencies PRF(1), PRF(2) and PRF(3) and the measured (perceived) values are designated $F_{m1}$, $F_{m2}$ and $F_{m3}$. In order to assist understanding of the de-aliasing procedure Figure 6 shows a graph of actual signal frequency against all possible indicated or perceived signal frequencies that could be obtained by measurement up to a certain limit and at two different pulse repetition frequencies.

In order to de-alias first all possible actual frequencies $F_{alias}(n)$ (within a certain range) that could generate the measured frequency $F_{m1}$ at PRF(1) are calculated for n=0 to 5 using the formula shown (n=alias number). These are indicated along the x axis in figure 6 for a measured frequency of 400Hz at a PRF of 2000Hz.

Thereafter for each possible actual frequency $F_{alias}$ (n) calculated, the expected frequency value $E_m(n)$ that would be obtained by measurement at PRF(2) and PRF (3) is calculated for each alias number n=0 to 5 using the formulas shown. Those for PRF(2) are shown along the y axis in figure 6.

The expected frequency values $E_m(n)$ are then compared to the measured values $F_{m1}$, $F_{m2}$ and $F_{m3}$ to determine the value of n at which there is the smallest difference between the compared values. Using this value of n an estimated actual frequency $F_{a1}$, $F_{a2}$ and $F_{a3}$ is calculated for each PRF. These values are then averaged to provide a final estimated frequency F.

For a given transmitter and receiver pair the amplitude response has a particular peak value for signals reflected from a certain distance or range. To either side of this peak response signals reflected from other distances are attenuated and suffer from impaired signal to noise ratio values. By selecting an appropriate transducer size (and thus controlling the width of the transmitted beam at a given distance from the transmitter) the best amplitude response of received signals for a particular range can be obtained. It will be understood that more than one pair of transmitter and receiver may be used, each pair being selected for optimum performance over a selected distance range. In this manner a relatively large range of distances can be covered effectively with an increased range of peak or near-peak amplitude response for the received reflected signals.

The peak response range can also be improved by careful selection of the separation distance of the transmitter and receiver of each pair and their inclination to each other.

For applications in which flow measurements are being taken across a wide channel, several pairs can be used across the width of the channel.

The present invention provides for a method of measuring fluid flow in which inaccuracies caused by multiple reflections of the transmitted signals and consequent ambiguities are reduced significantly.

By waiting for a predetermined time period to elapse before responding to the received signals, the signals reflected from the chosen region of interest are effectively weighted and selected for analysis. This method means that clutter created by reflected versions of the signal from other regions is reduced and does not cause ambiguities and associated errors in the signal processing.

As each transmitted pulse comprises random noise it is different from the previous or subsequent pulses transmitted and it is possible to extract the relevant reflected pulse as stochastic noise has a good auto-correlation function. This means that it is relatively easy to extract the relevant reflected pulse from the reflections of pulses sent before and reflected from further away, and reflections of pulses sent after and reflected from nearer to the transmitter. Thus by using stochastic noise it is possible for a plurality of pulses to be present in the liquid at any given time without ambiguity.

Careful selection of the geometry of each transducer enables easier extraction of the relevant pulse in that the reflected signal strength is not attenuated significantly. Finally, by using a sampling rate lower than the theoretical minimum and de-aliasing the perceived frequency measurements, the number of pulses present in the water and therefore the likelihood of measurements ambiguities can be reduced.

## Claims

1. A method of measuring a flow velocity of a liquid using a signal transmitter and receiver, comprising the steps of:

   selecting a region of said liquid, at a chosen distance from said transmitter, where flow velocity is to be determined;
   calculating a time period for a signal to travel from said transmitter to said receiver via said region;

transmitting a plurality of pulsed stochastic noise signals sequentially to said region at a given pulse repetition frequency;
receiving reflected signals when said time period for each transmitted pulse has elapsed;
correlating the received signals with a copy of the corresponding transmitted signals to identify the reflected signals;
generating a Doppler shift signal whose frequency is representative of the frequency differences between the transmitted and received signals; and
calculating the flow velocity by reference to the Doppler shift signal frequency.

2. A method according to claim 1, wherein the Doppler shift signal is sampled at a rate equivalent to the pulse repetition frequency of the plurality of stochastic noise pulses to provide discrete sampled frequency values.

3. A method according to claim 2, wherein for each pulse transmitted and received a Doppler shift signal is generated, and when a predetermined number of samples have been obtained the plurality of stochastic noise pulses are transmitted at a second pulse repetition frequency.

4. A method according to claim 2 or 3, wherein the sampling rate is less than the Nyquist limit of twice the maximum frequency of the signal being sampled.

5. A method according to claim 2, 3 or 4, wherein the sampled frequency values of the Doppler shift signal are converted from a time domain signal to a frequency domain signal to enable calculation of an average Doppler shift frequency.

6. A method according to claim 5. wherein the sampled frequency values are converted by Fourier transform.

7. A method according to claim 5 or 6, wherein the velocity of the flow is determined from the calculated average Doppler shift frequency.

8. A method according to claim 5, 6 or 7, wherein the average Doppler shift frequency is calculated by determining the centroid of the first moment of area of a plot of sampled frequency values in the frequency domain.

9. A method according to any one of claims 5 to 8 when dependent on claim 3, wherein the average Doppler shift frequencies for each pulse repetition frequency are de-aliased by calculating a real Doppler shift frequency for which the combination of the average Doppler shift frequencies are unique.

10. A method according to any preceding claim, wherein the noise signal is in the form of a pulse of ultrasonic frequency.

11. A method according to any preceding claim, whcrein a copy of the transmitted stochastic noise signal is passed to a delay circuit at the same time as it is transmitted.

12. A method according to claim 11, wherein the copy of the transmitted signal is delayed by the delay circuit before being passed to be correlated with the received signal.

13. A method of measuring a flow velocity of a liquid using a signal transmitter and receiver, comprising the steps of:

> a) transmitting a plurality of pulsed signals sequentially to a region at a first pulse repetition frequency:
> b) receiving reflected signals from said region for each transmitted signal;
> c) generating Doppler shift signals whose frequency is representative of the frequency differences between the transmitted and reflected signals;
> d) sampling the Doppler shift signals at a sample rate that is less than the Nyquist limit of twice the frequency of the signal being sampled;
> e) calculating an average perceived Doppler shift frequency from the samples of the Doppler shift signals;
> f) transmitting a plurality of pulsed signals sequentially to said region at a different pulse repetition frequency;
> g) repeating steps b) to e);
> h) de-aliasing the calculated average perceived Doppler shift frequencies to provide a real Doppler shift frequency; and
> i) calculating the flow velocity by reference to the real Doppler shift signal frequency.

14. A method according to claim 13, wherein the average perceived Doppler shift frequencies for each pulse repetition frequency are de-aliased by calculating a real Doppler shift frequency for which the combination of the perceived Doppler shift frequencies are unique.

15. A method according to claim 13 or 14. wherein the pulsed signals are transmitted at two or more different pulse repetition frequencies and the reflected signals in each case are sampled at a rate equal to the pulse repetition frequency.

16. A method according to any one of claims 14 to 15, wherein the average perceived Doppler shift frequency for each pulse repetition frequency is calculated by determining the centroid of the first moment of area of a plot of the sampled Doppler shift frequency values in the frequency domain.

17. A method according to any one of claims 13 to 16, wherein the samples of the Doppler shift signals are transformed to the frequency domain by Fourier Transforms.

18. A method according to any one of claims 13 to 17, further comprising the steps of:

> selecting a region of said liquid, at a chosen distance from said transmitter, where flow velocity is to be determined;
> calculating a time period for a signal to travel from said transmitter to said receiver via said region;
> transmitting a plurality of pulsed signals sequentially to said region at a given pulse repetition frequency;
> receiving reflected signals when said time period for each transmitted pulse has elapsed;
> correlating the received signals with a copy of the corresponding transmitted signals to identify the reflected signals;

19. A method according to claim 17, wherein the transmitted signals are pulses of stochastic noise.

20. A method of measuring the flow velocity of a liquid substantially as hereinbefore described with reference to the accompanying drawings.

FIG.1

EP 0 794 411 A2

FIG.2

FIG.3

EP 0 794 411 A2

Set Max number of readings N

Set last PRF PFRend

Set range = Rangemin

Set Max range RangeMax

Take set of M readings

FFT

Average into output array

Increment reading counter

is reading
counter = N

**N**

**Y**

Calculate and store
1st moment of spectrum

Reset reading counter
Select next PRF

i s
PRF = PRFend

**N**

**Y**

inc range

is
Range = Rangemax

**N**

**Y**

De-alias 1st moment values

Calculate and display
Velocity

# FIG.4

General overall software flow chart

For PRF(1) Calc all possible frequencies Falias (n) which could generate the measured frequency $F_{m1}$

For n=0 to 5

For n=0 to 5

$Falias(n)=\{PRF(N)\}+/-F_{m1}$

For PFR(2) and PFR(3) calculate expected frequency values $E_m(n)$ for each alias number n=0 to n=5 for each Falias(n) calculated for PRF(1)

if int(2\*Falias(n)/prf(N) is even

Then

$E_m = (prf(N/2)*(Mod|2Falias(n)/prf(n))|$

Else

$E_m=(pfr(N)/2)*(1-Mod|2*Falias(n)/prf(N)|)$

Find the value of n at which the smallest difference between the expected frequency $E_m(n)$ and the actual measured $F_{m2}$, $F_{m3}$ at PRF(2) and then PRF (3)

For n=0 to n=5

if $|F_{m2,3}(n)-E_m(n)|<$

$|F_{m2,3}(n+1)-E_m(n+1)|$

Then alias number=n

Using n calculate the estimated actual frequency for $F_{a1}$, $F_{a2}$, $F_{a3}$ for each PRF Average the three values to produce an estimated frequency, F

$F=Ave(F_{a1}, F_{a2}, F_{a3})$

# FIG.5

FIG.6